(19)

**Europäisches Patentamt**
**European Patent Office**
**Office européen des brevets**

(11) **EP 1 195 015 B1**

(12) **EUROPÄISCHE PATENTSCHRIFT**

(45) Veröffentlichungstag und Bekanntmachung des Hinweises auf die Patenterteilung:
**30.09.2009 Patentblatt 2009/40**

(21) Anmeldenummer: **00952920.7**

(22) Anmeldetag: **12.07.2000**

(51) Int Cl.:
*H04B 1/707* (2006.01)   *H04B 7/26* (2006.01)

(86) Internationale Anmeldenummer:
**PCT/DE2000/002272**

(87) Internationale Veröffentlichungsnummer:
**WO 2001/006671 (25.01.2001 Gazette 2001/04)**

(54) **VERFAHREN UND VORRICHTUNG ZUR SYNCHRONISATION VON MOBILFUNKEMPFÄNGERN IN EINEM MOBILFUNKSYSTEM**

METHOD AND DEVICE FOR SYNCHRONISING MOBILE TELEPHONE RECEIVERS IN A MOBILE TELEPHONE SYSTEM

PROCEDE ET DISPOSITIF POUR LA SYNCHRONISATION DE RECEPTEURS TELEPHONIQUES MOBILES DANS UN SYSTEME DE TELEPHONIE MOBILE

(84) Benannte Vertragsstaaten:
**AT BE CH CY DE DK ES FI FR GB GR IE IT LI LU MC NL PT SE**

(30) Priorität: **16.07.1999   DE 19933542**

(43) Veröffentlichungstag der Anmeldung:
**10.04.2002   Patentblatt 2002/15**

(73) Patentinhaber: **Infineon Technologies AG**
**81669 München (DE)**

(72) Erfinder:
• **DOETSCH, Markus**
  **D-81539 München (DE)**
• **JUNG, Peter**
  **D-67697 Otterberg (DE)**

• **PLECHINGER, Jörg**
  **D-80469 München (DE)**
• **SCHMIDT, Peter**
  **D-67167 Erpolzheim (DE)**
• **SCHNEIDER, Michael**
  **D-81541 München (DE)**
• **KELLA, Tideya**
  **D-80337 München (DE)**

(74) Vertreter: **Lange, Thomas et al**
**Patentanwälte**
**Lambsdorff & Lange**
**Dingolfinger Strasse 6**
**81673 München (DE)**

(56) Entgegenhaltungen:
**WO-A-98/59427          US-A- 5 271 034**
**US-A- 5 648 991**

**Beschreibung**

Die Erfindung betrifft ein Verfahren und eine Vorrichtung zur Synchronisation von Mobilfunkempfängern in einem Mobilfunksystem.

Bei Mobilfunksystemen muß sich ein Mobilfunkempfänger, der sich in das Mobilfunksystem "einbuchen" will, synchronisieren. Dabei umfaßt das Synchronisieren die Akquisition eines Synchronisationssignals und daran anschließend die Verfolgung (Tracking) dieses Signals, sowie eventuell weiterer Signale einer Verbindung.

In Mobilfunksystemen nach dem GSM-Standard (Global System für Mobile Communications) wird ein sogenannter Übertragungssteuerungs-Kanal (Broadcast Control Channel BCCH), der unidirektional Signale von jeder Basisstation zu Mobilfunkempfängern sendet, zur Aquisition verwendet. In einem Broadcast Control Channel werden für einen Mobilfunkempfänger wichtige Informationen, wie beispielsweise zur Leistungsregelung, über die Mindestempfangsfeldstärke und über die Frequenzlage des BCCH übertragen. Ferner wird in dem BCCH ein Frequenzsteuerungs-Kanal (Frequency Control Channel FCCH) zur Frequenzkorrektur, der einen Frequenzkorrektur-Burst aufweist, und ein Synchronisations-Channel (SCH) zur Synchronisation übertragen. Der SCH weist dabei einen sogenannten Synchronisations-Burst auf, durch den sich der Mobilfunkempfänger synchronisieren kann.

Beim Einschalten eines GSM-Mobilfunkempfängers werden alle möglichen Trägerfrequenzen nach dem BCCH abgesucht. Danach wird der Frequenzkorrektur-Burst zur Auswahl einer geeigneten Frequenz und der Synchronisations-Burst zum Einstellen eines korrekten Zeitbezugs ausgewertet.

Mobilfunksysteme, die auf dem Codemultiplex-Zugriffsverfahren (CDMA: Code Division Multiple Access) basieren, wie beispielsweise UMTS (Universal Mobile Telecommunication System) weisen einen Primären-Synchronisations-Kanal (Primary Synchronisation Channel PSCH) auf, der wie der BCCH bei GSM-Systemen unidirektional von jeder Basisstation an Mobilfunkempfänger übertragen wird. Die Frequenz des PSCH ist für alle Basisstationen des Mobilfunksystems gleich. Beim Einschalten eines Mobilfunkempfängers sucht dieser zuerst den PSCH, um eine Synchronisation von Zeit und Frequenz durchzuführen. Dabei wird eine anfangs zu grobe Einstellung der Frequenz des PSCH im Mobilfunkempfänger später durch entsprechende Algorithmen zur Frequenzkorrektur feineingestellt.

Ein Signal s(t), das über den PSCH übertragen und von einer Basisstation gesendet wird, weist die folgende Form auf:

$$s(t) = \sum_n c_n \cdot g(t - n \cdot T_c) \cdot \exp(j \cdot \omega_0 \cdot t) = c(t - T_d) \cdot \exp(j \cdot \omega_0 \cdot t)$$

wobei g(t) eine Pulsformfunktion (z.B. das Rechtecksignal), $T_c$ die Dauer eines Chips, $c_n$ die Chips des PSCH und $\omega_0$ = $2\pi f_0$ die Trägerfrequenz des PSCH ist. $T_d$ ist eine dem Empfänger unbekannte Verzögerungszeit, die sich unter anderem aufgrund der Laufzeit von der Basisstation zu einem Mobilfunkempfänger ergibt.

Die Chips $c_n$ sind in der Bandspreiztechnik üblicherweise binär durch die Werte +1 und -1 kodiert:

$$c_n = 2 \cdot b_n - 1$$

wobei $b_n$ eine Folge von 1/0-Bits darstellt. Andere, beispielsweise aus der BTQ-Transformation hervorgehende Chipalphabete sind durchaus möglich.

Mit dem PSCH werden insgesamt 256 binäre chips $c_n$ übertragen. Die Chips sind dabei jedem Mobilfunkempfänger und jeder Basisstation bekannt und stellen eine eindeutige Sequenz von Bits zur Identifikation des PSCH dar.

Bei der Übertragung über.den PSCH wird das Signal s(t) durch Rauschen und Interferenzen, die beispielsweise durch einen Secondary Synchronisation Channel (SSCH) und andere Nachbarkanälen auftreten, verzerrt.

Ein demoduliertes Empfangssignal r(t), dem das Sendesignal s(t) zugrunde liegt, weist dann in einem Mobilfunkempfänger die folgende Form auf:

$$r(t) = c(t - T_d) \cdot \exp(j \cdot \Delta\omega \cdot t + \varphi) + n(t)$$

Die Funktion n(t) stellt die Störungen, die aufgrund von Rauschen und Interferenzen auftreten, dar. Die Frequenz $\Delta\omega$ ist dabei die Abweichung im Mobilfunkempfänger von der Sendesignalfrequenz $\omega_0$. Für die zur Demodulation ver-wendete Frequenz $\omega_d$ gilt: $\omega_d = \omega_0 + \Delta\omega$.

Problematisch ist nun die korrekte Detektion der Chips aus dem Empfangssignal r(t), d.h. die Synchronisation, und die genaue Einstellung der Demodulationsfrequenz $\omega_d$ auf die Sendesignalfrequenz $\omega_0$, um den Mobilfunkempfänger richtig zu synchronisieren. Zur Detektion ist nämlich die unbekannte Verzögerungszeit $T_d$ sowie eine möglichst gut an die Sendesignalfrequenz $\omega_0$ angenäherte Demodulationsfrequenz $\omega_d$ erforderlich.

Die Schrift WO 98/59427 A1 betrifft eine Synchronisierungs-Einrichtung, welche auf dem Prinzip phasenversetzt zueinander angesteuerter Korrelatoren arbeitet.

Die Schrift "Intrabuilding Data Transmission Using Power-Line Wiring" von R. A. Piety, veröffentlicht Mai 1987 im Hewlett-Packard Journal, HEWLETT PACKARD CO., Palo Alto, USA, Seiten 35 - 40 (XP-000984462), beschreibt eine Synchronisation eines Empfängers in einem drahtgebundenen LAN (Local Area Network), in welchem Daten in spreizcodierter Form übertragen werden. Der Empfänger nutzt zur Synchronisation zwei Filter, die jeweils ein Mehrstufen-Schieberegister enthalten.

In der Schrift EP 0 892 528 A2 wird vorgeschlagen, zur Beschleunigung der Aquisition eines Empfangssignals das Empfangssignal unter Anwendung unterschiedlicher Zeitlagen-Hypothesen zu entspreizen und auf der Basis der entspreizten Signale durch Anwendung einer Fourier-Transformation eine Frequenzabweichung zu ermitteln.

Es ist die Aufgabe der vorliegenden Erfindung, ein Verfahren und eine Vorrichtung zur Synchronisation von Mobilfunkempfängern in einem Mobilfunksystem, dem das Codemultiplex-Verfahren zugrunde liegt, anzugeben.

Die Aufgabe wird durch ein Verfahren zur Synchronisation von Mobilfunkempfängern in einem Mobilfunksystem mit den Merkmalen von Patentanspruch 1 und eine Vorrichtung zur Durchführung des Verfahrens mit den Merkmalen von Patentanspruch 5 gelöst. Bevorzugte Ausführungsformen der Erfindung sind Gegenstand der entsprechenden abhängigen Patentansprüche.

Erfindungsgemäß wird die Aufgabe durch ein Verfahren zur Synchronisation von CDMA-Mobilfunkempfängern in einem Mobilfunksystem gelöst, in welchem über den eine erste Frequenz aufweisenden ersten Synchronisationskanal PSCH im UMTS-Standard der für alle Mobilfunkempfänger und für alle Basisstationen des Mobilfunksystems bekannte PSCH-Synchronisations-Code mittels eines Synchronisations-Signals übertragen wird, wobei das Synchronisations-Signal am Mobilfunkempfänger mit einer unbekannten Zeitlage eintrifft und die erste Frequenz auf eine zweite Frequenz verschoben ist. In dem Verfahren wird die unbekannte Zeitlage des Synchronisations-Signals durch Filtern desselben mit einem Filter, dessen Übertragungsfunktion abhängig von dem bekannten PSCH-Synchronisations-Code ist, geschätzt. Das empfangene Synchronisations-Signal wird mit dem bekannten PSCH-Synchronisations-Code unter Berücksichtigung der geschätzten Zeitlage entspreizt. Die Frequenzabweichung zwischen der ersten und der zweiten Frequenz wird auf der Basis des entspreizten Synchronisations-Signals bestimmt. Danach wird eine Feineinstellung der zweiten Frequenz auf die erste Frequenz vorgenommen.

Vorzugsweise umfasst das Schätzen der unbekannten Zeitspanne die folgenden Schritte:

a) Aufspalten des empfangenen Synchronisations-Signals in Real- und Imaginärteilsignale,
b) Abtasten jedes in a) durch Aufspaltung erhaltenen Signals,
c) digitales Filtern jedes in b) abgetasteten Signals zur Korrelation desselben mit dem bekannten PSCH-Synchronisations-Code,
d) Quadrieren jedes in c) gefilterten Signales,
e) Ermitteln des größten Signalpegels aus beiden in d) quadrierten Signalen, und
f) Schätzen der unbekannten Zeitlage mit dem in e) ermittelten größten Signalpegel.

Vorteilhafterweise ist dieses Verfahren sowohl für die Akquisition als auch die Verfolgung (Tracking) in auf UMTS basierenden Mobilfunksystemen einsetzbar.

In einer bevorzugten Ausführungsform weist der mit dem Synchronisations-Signal übertragene PSCH-Synchronisations-Code eine Folge von 256 Chips auf, wobei die 256 Chips eindeutig den ersten Synchronisationskanal kennzeichnen. Das empfangene PSCH-Synchronisations-Signal wird dabei insbesondere mit einer Abtastrate abgetastet, bei der pro Chip des Codes zwei Abtastwerte genommen werden.

Die Erfindung betrifft weiterhin eine Vorrichtung zur Synchronisation von CDMA-Mobilfunkempfängern in einem Mobilfunksystem, in welchem über den eine erste Frequenz aufweisenden ersten Synchronisationskanal PSCH im UMTS-Standard der für alle Mobilfunkempfänger und für alle Basisstationen des Mobilfunksystems bekannte PSCH-Synchronisations-Code mittels eines Synchronisations-Signals übertragen wird, vorgesehen ist, wobei die Vorrichtung Mittel zur Ausführung der im Anspruch 1 angegebenen Verfahrensschritte aufweist. Im Mobilfunkempfänger sind vorzugsweise Eingangssignalverarbeitungseinheiten für den Real- und Imaginärteil eines empfangenen Signals vorgesehen, denen Real- und Imaginärteilsignale zugeführt werden und die Abtastwerte erzeugen, welche zur Korrelation der Real- und Imaginärteilsignale mit dem bekannten PSCH-Code jeweils in Reihe geschalteten Verzögerungsschaltungen zugeführt werden, wobei das Eingangssignal und das Ausgangssignal jeder Verzögerungsschaltung jeweils einem Multiplizierer, der ein zugeführtes Signal mit einem Koeffizienten multipliziert, zugeführt wird und die Ausgangssignale der Multiplizierer ersten Addierern, denen Quadrierer nachgeschaltet sind, zugeführt werden und wobei Ausgangssignale der Quadrierer einem zweiten Addierer zugeführt werden.

Vorzugsweise umfaßt eine Eingangssignalverarbeitung ein analoges Tiefpaßfilter, dem ein Abtaster sowie ein Speicher zum Speichern der Abtastwerte nachgeschaltet sind.

Vorzugsweise sind (K+1) verschiedene Koeffizienten vorgesehen.

Weitere Vorteile und Anwendungsmöglichkeiten der Erfindung ergeben sich aus der nachfolgenden Beschreibung von Ausführungsbeispielen in Verbindung mit der Zeichnung. In der Zeichnung zeigt

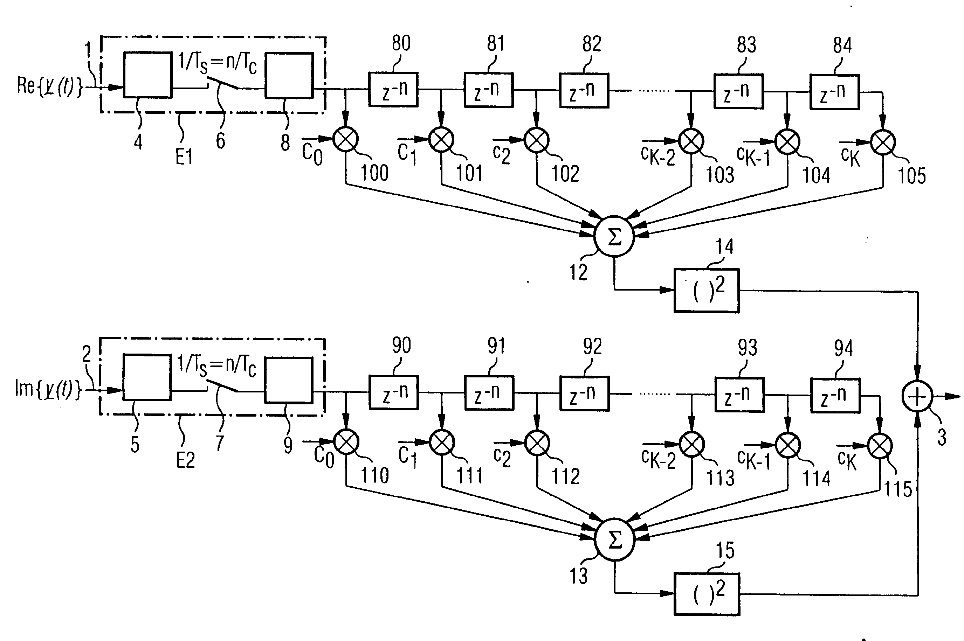

Figur 1 ein Ausführungsbeispiel der Vorrichtung zur Durchführung des erfindungsgemäßen Verfahrens.

Die in Figur 1 abgebildete Vorrichtung stellt ein inkohärentes digitales Filter zur Ermittlung der aufgrund der Übertragung unbekannten Verzögerung $T_d$ dar. Das inkohärente Filter weist die folgende Übertragungsfunktion auf:

$$h(t) = c^*(K \cdot T_c - t)$$

mit $0 \le t \le K \cdot T_c$.

K entspricht dabei der Anzahl der Koeffizienten, die in dem digitalen Filter zur Filterung verwendet werden.

Zur Ermittlung der Verzögerung $T_d$ wird das komplexe empfangene Signal im Mobilfunkempfänger zuerst in einen Realteil 1 und einen Imaginärteil 2 aufgespalten. Der Realteil 1 und der Imaginärteil 2 werden danach parallel durch eine jeweilige gleiche Eingangssignalverarbeitung prozessiert.

Der Realteil 1 und der Imaginärteil 2 wird jeweils einem analogen Tiefpaßfilter 4 bzw. 5 zugeführt.

Dem Tiefpaßfilter 4 bzw. 5 ist jeweils ein Abtaster 6 bzw. 7 nachgeschaltet, der mit einer Abtastrate $T_S$ das Ausgangssignal des Tiefpaßfilters 4 bzw. 5 abtastet. Dabei ist als Abtastrate $T_c = 2 T_s$ gewählt, d.h. pro Dauer eines Chips des Empfangssignals werden zwei Abtastwerte genommen. Jeder Chip ist damit durch zwei Abtastwerte charakterisiert. Für genauere Ergebnisse des durchzuführenden Verfahrens können pro Chip mehr als zwei Abtastwert genommen werden, allerdings steigt dann der nachfolgende Aufwand zur Verarbeitung der Abtastwerte. Nachfolgend den Abtastern 6 und 7 ist jeweils ein Speicher 8 bzw. 9 angeordnet.

Der tiefpaßgefilterte und abgetastete Realteil bez. Imaginärteil sei im folgenden mit $Re_k$ bzw. $Im_k$ bezeichnet. Der Index k bezeichnet dabei einen Abtastwert.

Jeder Abtastwert wird im folgenden um bis zu (2K+1)-Taktzyklen verzögert und mit jedem der K Koeffizienten des Filters multipliziert. Die Ergebnisse der Multiplikationen werden dann summiert, quadriert und einer Schätzschaltung zugeführt, die das stärkste Ausgangssignal feststellt. Das stärkste Ausgangssignal wird daraufhin einer Frequenzfeineinstellung zugeführt, die die zur Demodulation benutzte Frequenz auf die Sendesignalfrequenz feineinstellt.

Die Abtastwerte $Re_k$ und $Im_k$ werden einer Verzögerungsschaltung, die eine Vielzahl von in Reihe geschalteten Verzögerungsgliedern 80, 81, 82, 83 bis 84 bzw. 90, 91, 92, 93 bis 94 aufweist, zugeführt. Jede Reihe weist dabei 2K+1 Verzögerungsglieder auf.

Vor dem Eingang jedes der 2K-1 Verzögerungsglieder 80, 81, 82, 83, 84 bzw. 90, 91, 92, 93, 94 wird ein Eingangssignal des jeweiligen Verzögerungsgliedes parallel einem Multiplizierer 100 bzw. 110, 101 bzw. 111, 102 bzw. 112, 103 bzw. 113, 104 bzw. 114 zugeführt. Zusätzlich wird das Ausgangssignal des letzten Verzögerungsgliedes 84 bzw. 94 einem Multiplizierer 105 bzw. 115 zugeführt. Somit sind 2K+2 Multiplizierer - pro Filterkoeffizient zwei Multiplizierer - vorhanden, wobei jeweils zwei Multiplizierer 100 und 101 bzw. 110 und 111 bis 104 und 105 bzw. 114 und 115 einen Abtastwert - einer davon um einen Taktzyklus verzögert - mit dem gleichen Koeffizienten $c_0$ bis $c_K$ des Filters multiplizieren.

Die Ausgangssignale der Multiplizierer 100 bis 105 und 110 bis 115 werden einem ersten Addierer 12 bzw. 13 zugeführt.

Dem ersten Addierer 12 und 13 ist ein Quadrierer 14 bzw. 15 nachgeschaltet, der das Ausgangssignal der Addierer 12 bzw. 13 quadriert.

Das Ausgangssignal des Quadrierers 14 und das Ausgangssignal des Quadrierers 15 wird einem zweiten Addierer 16 zugeführt.

Das Ausgangssignal 3 des zweiten Addierers 16, das einer Folge von gefilterten Abtastwerten des Empfangssignals entspricht, wird dann einer Schätzschaltung zur Ermittlung des stärksten Signals der Folge zugeführt.

Das Ausgangssignal 3 weist dabei den folgenden Verlauf auf:

$$y(t) = r(t) * h(t).$$

Für die Zeitvariable t gilt: $t = 0, T_s, 2T_s, \ldots$

Das stärkste Ausgangssignal tritt dabei bei der Verzögerungszeit, die der unbekannten Verzögerungszeit $T_d$ am nächsten liegt, auf. Damit läßt sich auf einfache Weise die unbekannte Verzögerungszeit $T_d$ in der Schätzschaltung bestimmen.

Mit Kenntnis der unbekannten Verzögerungszeit $T_d$ kann das Empfangssignal r(t) entspreizt werden und zur Feineinstellung der Demodulationsfrequenz $\omega_d$ auf die Sendesignalfrequenz $\omega_0$ verarbeitet werden.

Das entspreizte Signal e(t) weist den folgenden Verlauf auf:

$$e(t) = r(t + T_d) \cdot c^*(t)$$
$$= (c(t) \cdot \exp(j \cdot (\Delta\omega \cdot (t + T_d) + \varphi)) + n(t + T_d)) \cdot c^*(t)$$
$$= |c(t)|^2 \cdot \exp(j \cdot (\Delta\omega \cdot t + \varphi_0)) + n(t + T_d) \cdot c^*(t)$$
$$= |c(t)|^2 \cdot \exp(j \cdot (\Delta\omega \cdot t + \varphi_0)) + n'(t)$$

Nach Abtastung des entspreizten Signals e(t) mit der Abtastrate $T_s$ erhält man die Folge:

$$e_n = A_n \cdot \exp(j \cdot (n \cdot \Delta\omega \cdot T_s + \varphi_0)) + n'_n$$

Setzt man $\Delta\omega = 2\pi f'$ und $T_b = N\,T_s$, so ergibt sich für die Folge:

$$e_n = A_n \cdot e^{j \cdot \varphi_0} \cdot \exp(j \cdot 2\pi \cdot f' \cdot T_b \cdot \frac{n}{N}) + n'_n$$

Diese Folge kann auf einfache Weise mit Algorithmen zur Frequenzkorrektur zur Feststellung des Frequenzabweichung f' weiterverarbeitet werden.

**Patentansprüche**

1. Verfahren zur Synchronisation von CDMA-Mobilfunkempfängern in einem Mobilfunksystem, in welchem über den eine erste Frequenz aufweisenden ersten Synchronisationskanal PSCH im UMTS-Standard der für alle Mobilfunkempfänger und für alle Basisstationen des Mobilfunksystems bekannte PSCH-Synchronisations-Code mittels eines Synchronisations-Signals übertragen wird, wobei das Synchronisations-Signal am Mobilfunkempfänger mit einer unbekannten Zeitlage eintrifft und die erste Frequenz auf eine zweite Frequenz verschoben ist, mit den folgenden Schritten:

   - Schätzen der unbekannten Zeitlage des Synchronisations-Signals durch Filtern desselben mit einem Filter, dessen Übertragungsfunktion abhängig von dem bekannten PSCH-Synchronisations-Code ist,
   - Entspreizen des empfangenen Synchronisations-Signals mit dem bekannten PSCH-Synchronisations-Code unter Berücksichtigung der geschätzten Zeitlage,
   - Bestimmen der Frequenzabweichung zwischen der ersten und der zweiten Frequenz auf der Basis des entspreizten Synchronisations-Signals, und
   - Feineinstellen der zweiten Frequenz auf die erste Frequenz.

2. Verfahren nach Anspruch 1, **dadurch gekennzeichnet, daß** der mit dem Synchronisations-Signal übertragene PSCH-Synchronisations-Code eine Folge von 256 Chips aufweist.

3. Verfahren nach Anspruch 1 oder 2, **dadurch gekennzeichnet, daß** das Schätzen der unbekannten Zeitlage durch Filtern des Synchronisations-Signals die folgenden Schritte umfasst:

   a) Aufspalten des empfangenen Synchronisations-Signals in Real- und Imaginärteilsignale,
   b) Abtasten jedes in a) durch Aufspaltung erhaltenen Signals,

c) digitales Filtern jedes in b) abgetasteten Signals zur Korrelation desselben mit dem bekannten PSCH-Synchronisations-Code,

d) Quadrieren jedes in c) gefilterten Signals,

e) Ermitteln des größten Signalpegels aus beiden in d) quadrierten Signalen, und

f) Schätzen der unbekannten Zeitlage mit dem in e) ermittelten größten Signalpegel.

4. Verfahren nach Anspruch 3, **dadurch gekennzeichnet, daß** die durch Aufspaltung erhaltenen Real- und Imaginärteilsignale mit einer Abtastrate abgetastet werden, bei der pro Chip des PSCH-Synchronisations-Codes zwei Abtastwerte genommen werden.

5. Vorrichtung zur Synchronisation von CDMA-Mobilfunkempfängern in einem Mobilfunksystem, in welchem über den eine erste Frequenz aufweisenden ersten Synchronisationskanal PSCH im UMTS-Standard der für alle Mobilfunkempfänger und für alle Basisstationen des Mobilfunksystems bekannte PSCH-Synchronisations-Code mittels eines Synchronisations-Signals übertragen wird, wobei das Synchronisations-Signal am Mobilfunkempfänger mit einer unbekannten Zeitlage und auf eine zweite Frequenz verschoben eintrifft, wobei der Mobilfunkempfänger umfasst:

- Mittel zum Schätzen der unbekannten Zeitlage des Synchronisations-Signals durch Filtern desselben mit einem Filter, dessen Übertragungsfunktion abhängig von dem bekannten PSCH-Synchronisations-Code ist,
- Mittel zum Entspreizen des empfangenen Synchronisations-Signals mit dem bekannten PSCH-Synchronisations-Code,
- Mittel zum Bestimmen der Frequenzabweichung zwischen der ersten und der zweiten Frequenz auf der Basis des entspreizten Synchronisations-Signals und
- Mittel zum Feineinstellen der ersten Frequenz auf die zweite Frequenz.

6. Vorrichtung nach Anspruch 5, **dadurch gekennzeichnet, daß** im Mittel zum Schätzen der unbekannten Zeitlage durch Filtern des Synchronisations-Signals Eingangssignalverarbeitungseinheiten (E1, E2) für den Real- und Imaginärteil eines empfangenen Signals vorgesehen sind, denen Real- und Imaginärteilsignale (1, 2) zugeführt werden und die Abtastwerte erzeugen, welche zur Korrelation der Real- und Imaginärteilsignale mit dem bekannten PSCH-Synchronisations-Code jeweils in Reihe geschalteten Verzögerungsschaltungen (80 bis 84, 90 bis 94) zugeführt werden, wobei das Eingangssignal und das Ausgangssignal jeder Verzögerungsschaltung jeweils einem Multiplizierer (100 bis 105, 110 bis 115), der ein zugeführtes Signal mit einem Koeffizienten multipliziert, zugeführt wird und die Ausgangssignale der Multiplizierer ersten Addierern (12, 13), denen Quadrierer (14, 15) nachgeschaltet sind, zugeführt werden und wobei Ausgangssignale der Quadrierer (14, 15) einem zweiten Addierer (16) zugeführt werden.

7. Vorrichtung nach Anspruch 6, **dadurch gekennzeichnet, daß** die Eingangssignalverarbeitungseinheit (E1, E2) ein analoges Tiefpaßfilter (4, 5), einen Abtaster (6, 7) sowie einen Speicher (8, 9) aufweist.

8. Vorrichtung nach Anspruch 6, **dadurch gekennzeichnet, daß** (K+1) verschiedene Koeffizienten ($c_0$ bis $c_K$) vorgesehen sind.

## Claims

1. Method for synchronizing CDMA mobile telephone receivers in a mobile telephone system, in which the PSCH synchronization code, known to all the mobile telephone receivers and to all the base stations of the mobile telephone system, is transmitted using the UMTS standard by means of a synchronization signal over the first synchronization channel PSCH having a first frequency, wherein the synchronization signal arrives at an unknown time slot at the mobile telephone receiver, and the first frequency is shifted to a second frequency, having the following steps:

- estimation of the unknown time slot of the synchronization signal by filtering said synchronization signal with a filter whose transmission function is dependent on the known PSCH synchronization code,
- despreading of the received synchronization signal with the known PSCH synchronization code taking into account the estimated time slot,
- determination of the frequency error between the first and second frequencies on the basis of the despread synchronization signal, and
- fine tuning of the second frequency to the first frequency.

**2.** Method according to Claim 1, **characterized in that** the PSCH synchronization code which is transmitted with the synchronization signal has a sequence of 256 chips.

**3.** Method according to Claim 1 or 2, **characterized in that** the estimation of the unknown time slot by filtering the synchronization signal comprises the following steps:

a) splitting the received synchronization signal into real and virtual component signals,
b) sampling each signal obtained in a) by splitting,
c) digital filtering of each signal sampled in b) in order to correlate said signal with the known PSCH synchronization code,
d) squaring of each signal filtered in c),
e) determination of the highest signal level from the two signals squared in d), and
f) estimation of the unknown time slot with the highest signal level determined in e).

**4.** Method according to Claim 3, **characterized in that** the real and virtual component signals obtained by splitting are sampled with a sampling rate in which two sampled values are acquired per chip of the PSCH synchronization code.

**5.** Device for synchronizing CDMA mobile telephone receivers in a mobile telephone system, in which the PSCH synchronization code, known to all the mobile telephone receivers and to all the base stations of the mobile telephone system, is transmitted using the UMTS standard by means of a synchronization signal over the first synchronization channel PSCH having a first frequency, wherein the synchronization signal arrives at an unknown time slot and shifted to a second frequency at the mobile telephone receiver, wherein the mobile telephone receiver comprises:

- means for estimating the unknown time slot of the synchronization signal by filtering said synchronization signal with a filter whose transmission function is dependent on the known PSCH synchronization code,
- means for despreading the received synchronization signal with the known PSCH synchronization code,
- means for determining the frequency error between the first and the second frequencies on the basis of the despread synchronization signal, and
- means for fine tuning the first frequency to the second frequency.

**6.** Device according to Claim 5, **characterized in that** input-signal-processing units (E1, E2) for the real and virtual components of a received signal are provided in the means for estimating the unknown time slot by filtering the synchronization signal, to which input-signal-processing units (E1, E2) real and virtual component signals (1, 2) are fed, and which input-signal-processing units (E1, E2) generate sampled values which are fed to delay circuits (80 to 84, 90 to 94), respectively connected in series, in order to correlate the real and virtual component signals with the known PSCH synchronization code, wherein the input signal and the output signal of each delay circuit are respectively fed to a multiplier (100 to 105, 110 to 115) which multiplies a fed-in signal by a coefficient, and the output signals of the multipliers are fed to first adding elements (12, 13) downstream of which squaring elements (14, 15) are connected, and wherein output signals of the squaring elements (14, 15) are fed to a second adding element (16).

**7.** Device according to Claim 6, **characterized in that** the input-signal-processing unit (E1, E2) has an analogue low-pass filter (4, 5), a sampling element (6, 7) and a memory (8, 9).

**8.** Device according to Claim 6, **characterized in that** (K+1) different coefficients ($c_0$ to $c_K$) are provided.

## Revendications

**1.** Procédé de synchronisation de récepteurs de téléphonie mobile CDMA dans un système de téléphonie mobile, dans lequel on transmet, au moyen d'un signal de synchronisation par le premier canal PSCH de synchronisation ayant une première fréquence dans la norme UMTS, le code de synchronisation PSCH connu pour tous les récepteurs de téléphonie mobile et pour toutes les stations de base du système de téléphonie mobile, le signal de synchronisation entrant dans le récepteur de téléphonie mobile en ayant une position dans le temps qui est inconnue et la première fréquence étant décalée sur une deuxième fréquence, comprenant les stades suivantes :

- on évalue la position dans le temps du signal de synchronisation qui est inconnue en le filtrant par un filtre dont la fonction de transfert dépend du code de synchronisation PSCH connu,

- on étale le signal de synchronisation reçu avec le code de synchronisation PSCH qui est connu en tenant compte de l'évaluation de la position dans le temps,

- on détermine l'écart de fréquence entre la première et la deuxième fréquences sur la base du signal de synchronisation étalé, et

- on règle finement la deuxième fréquence sur la première fréquence.

2. Procédé suivant la revendication 1, **caractérisé en ce que** le code de synchronisation PSCH transmis par le signal de synchronisation a une suite de 256 chips.

3. Procédé suivant la revendication 1 ou 2, **caractérisé en ce que** l'évaluation de la position dans le temps qui est inconnue par filtrage du signal de synchronisation comprend les stades suivants :

a) on sépare le signal de synchronisation reçu en des sous signaux réel et imaginaire,

b) on échantillonne chaque signal obtenu par séparation dans a),

c) on filtre numériquement chaque signal échantillonné dans b) pour le corréler au code de synchronisation PSCH qui est connu,

d) on élève au carré chaque signal filtré dans c),

e) on détermine le niveau le plus grand des deux signaux élevés au carré dans d), et

f) on évalue la position dans le temps qui est inconnue par le niveau de signal le plus grand déterminé dans e) .

4. Procédé suivant la revendication 3, **caractérisé en ce que** l'on échantillonne les sous signaux réel et imaginaire obtenus par la séparation à un taux d'échantillonnage, pour lequel on prend deux valeurs d'échantillonnage par chip du code de synchronisation PSCH.

5. Dispositif de synchronisation de récepteurs de téléphonie mobile CDMA dans un système de téléphonie mobile, dans lequel on transmet, au moyen d'un signal de synchronisation par le premier canal PSCH de synchronisation ayant une première fréquence dans la norme UMTS, le code de synchronisation PSCH connu pour tous les récepteurs de téléphonie mobile et pour toutes les stations de base du système de téléphonie mobile, le signal de synchronisation entrant dans le récepteur de téléphonie mobile en ayant une position dans le temps qui est inconnue et la première fréquence étant décalée sur une deuxième fréquence, dans lequel le récepteur de téléphonie comprend :

- des moyens d'évaluation de la position dans le temps du signal de synchronisation qui est inconnue par filtrage de celui-ci par un filtre dont la fonction de transfert dépend du code de synchronisation PSCH connu,

- des moyens d'étalement du signal de synchronisation reçu avec le code de synchronisation PSCH qui est connu,

- des moyens de détermination de l'écart de fréquence entre la première et la deuxième fréquence sur la base du signal de synchronisation étalé, et

- des moyens de réglage fins de la première fréquence sur la deuxième fréquence.

6. Dispositif suivant la revendication 5, **caractérisé en ce qu'**il est prévu, dans les moyens d'évaluation de la position dans le temps qui est inconnue par filtrage du signal de synchronisation, des unités (E1, E2) de traitement du signal d'entrée pour la partie réelle et pour la partie imaginaire d'un signal reçu, auquel des sous signaux (1, 2) réel et imaginaire sont envoyés et qui produisent des valeurs d'échantillonnage qui, pour la corrélation des sous signaux réel et imaginaire avec le code de synchronisation PSCH qui est connu, sont envoyés respectivement à des circuits (80 à 84, 90 à 94) de temporisation montés en série, le signal d'entrée et le signal de sortie de chaque circuit de temporisation étant envoyés respectivement à un multiplicateur (100 à 105, 110 à 115) qui multiplie un signal envoyé par un coefficient et les signaux de sortie des multiplicateurs étant envoyés à de premiers additionneurs (12, 13) en aval desquels sont montés des circuits (14, 15) pour élever au carré et les signaux de sortie des circuits (14, 15) pour élever au carré étant envoyés à un deuxième additionneur (16).

7. Dispositif suivant la revendication 6, **caractérisé en ce que** les unités (E1, E2) de traitement du signal d'entrée ont un filtre (4, 5) passe bas analogique, un échantillonneur (6, 7) ainsi qu'une mémoire (8, 9).

8. Dispositif suivant la revendication 6, **caractérisé en ce qu'**il est prévu (K + 1) coefficients ($C_0$ à $C_K$) différents.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 9859427 A1
- EP 0892528 A2

### In der Beschreibung aufgeführte Nicht-Patentliteratur

- Intrabuilding Data Transmission Using Power-Line Wiring. **R. A. Piety.** veröffentlicht Mai 1987 im Hewlett-Packard Journal. HEWLETT PACKARD CO, 35-40